# FASCICULE DE BREVET EUROPEEN

(11) **EP 3 169 557 B1**
(45) Date de publication et mention de la délivrance du brevet: **31.01.2018**
(21) Numéro de dépôt: 15736436.5
(22) Date de dépôt: 06.07.2015
(51) Int. Cl.: B60R 25/021

(54) **ANTIVOL POUR VÉHICULE AUTOMOBILE**
KRAFTFAHRZEUGDIEBSTAHLSCHUTZ
MOTOR VEHICLE ANTITHEFT

(30) Priorité: 16.07.2014 FR 1456827
(43) Date de publication de la demande: 24.05.2017
(73) Titulaire: U-Shin France, 94000 Créteil (FR)
(72) Inventeur: POGGI, Patrice, F-94046 Creteil Cedex (FR)
(74) Mandataire: Gaillarde, Frédéric F. Ch.
(86) Numéro de dépôt international: PCT/EP2015/065392
(87) Numéro de publication internationale: WO 2016/008761

(56) Documents cités:
- EP-A1- 0 995 648
- EP-A2- 0 806 328
- EP-A2- 1 982 877
- FR-A- 516 503
- FR-A1- 2 988 057

## Description

### DOMAINE TECHNIQUE

La présente invention concerne un antivol pour véhicule automobile destiné, en particulier, à commander le déblocage d'une colonne de direction du véhicule lors de l'allumage du véhicule automobile. (voir EP806328A).

### ARRIÈRE-PLAN TECHNOLOGIQUE

Il est connu d'utiliser un antivol pour véhicule automobile, du type comportant :
- un premier boîtier,
- un barillet s'étendant au moins en partie dans le premier boîtier, le barillet étant destiné à tourner dans le premier boîtier autour d'un axe AA',
- un second boîtier,
- un pêne s'étendant au moins en partie dans le second boîtier, le pêne étant destiné à prendre une position de blocage d'une colonne de direction et une position de non-blocage de la colonne de direction,
- une chaîne cinématique entre le pêne et le barillet de sorte qu'une rotation du barillet déplace le pêne de sa position de blocage à sa position de non blocage,
- un système de verrouillage destiné à verrouiller le pêne en position de blocage, le système de verrouillage s'étendant au moins en partie dans le second boîtier,
- une pièce d'activation du système de verrouillage, la pièce d'activation présentant un tronçon extérieur reliée au premier boîtier et s'étendant jusqu'au second boîtier et un tronçon intérieur s'étendant à l'intérieur du second boîtier et relié au système de verrouillage de sorte qu'un déplacement du premier boîtier déplace la pièce d'activation dans une position dans laquelle la pièce d'activation active le système de verrouillage.

Grâce au système de verrouillage et à la pièce d'activation, si une personne malveillante essaie de retirer le premier boîtier de protection du barillet, la colonne de direction reste bloquée quel que soit la rotation du barillet.

L'invention a pour but de proposer un antivol pour véhicule automobile réduisant le risque qu'une personne malveillante puisse inhiber le système de verrouillage.

### RÉSUMÉ DE L'INVENTION

À cet effet, il est proposé un antivol pour véhicule automobile du type précité, caractérisé en ce que l'antivol comporte en outre une première pièce de protection s'étendant du premier boîtier au second boîtier de sorte qu'au moins une partie du tronçon extérieur de la pièce d'activation soit situé entre la première pièce de protection et le premier boîtier.

En effet, dans l'état de technique, il est généralement possible, en enlevant l'habillage de l'habitacle entourant le premier boîtier, d'accéder à la pièce d'activation du système de verrouillage. Ainsi, la personne malveillante peut scier le tronçon extérieur de la pièce d'activation, ce qui a pour effet que la personne malveillante peut déplacer le premier boîtier tandis que le tronçon interne de la pièce d'activation reste en place et empêche l'activation du système de verrouillage. Grâce à l'invention, la pièce de protection entrave le sciage du tronçon extérieur de la pièce d'activation - au moins sur la partie de ce tronçon extérieur située entre la première pièce de protection et le premier boîtier - et empêche donc, ou au moins rend difficile, d'inhiber le système de verrouillage de cette manière.

De façon optionnelle, pour tout plan de coupe perpendiculaire à l'axe AA' passant par le tronçon extérieur de la première pièce de protection, au moins une partie de la section de la pièce d'activation dans ce plan de coupe se trouve dans une surface du plan de coupe, appelée surface protégée, délimitée par la première pièce de protection, une autre pièce de l'antivol, appelée seconde pièce de protection, et deux droites du plan de coupe s'appuyant de chaque côté sur la première pièce de protection et la seconde pièce de protection, sans passer entre la première pièce de protection et la seconde pièce de protection.

De façon optionnelle également, pour tout plan de coupe perpendiculaire à l'axe AA' passant par le tronçon extérieur de la première pièce de protection, toute la section de la pièce d'activation dans ce plan de coupe se trouve dans une surface du plan de coupe, appelée surface protégée, délimitée par la première pièce de protection, une autre pièce de l'antivol, appelée seconde pièce de protection, et deux droites du plan de coupe s'appuyant de chaque côté sur la première pièce de protection et la seconde pièce de protection, sans passer entre la première pièce de protection et la seconde pièce de protection.

De façon optionnelle également, pour chaque plan de coupe, la seconde pièce de protection est l'une parmi : le premier boîtier, le barillet, une pièce de la chaîne cinématique et le second boîtier.

De façon optionnelle également, pour au moins un plan de coupe perpendiculaire à l'axe AA' passant par le tronçon extérieur de la première pièce de protection, la seconde pièce de protection présente une résistance mécanique à la traction R_{M} d'au moins 200 MPa ou une dureté Brinell d'au moins 100 HB.

De façon optionnelle également, pour tout plan de coupe perpendiculaire à l'axe AA' passant par le tronçon extérieur de la première pièce de protection, la seconde pièce de protection présente une résistance mécanique à la traction R_{M} d'au moins 200 MPa ou une dureté Brinell d'au moins 100 HB.

De façon optionnelle également, la première pièce de protection est dans un matériau présentant une résistance mécanique à la traction R_{M} d'au moins 200 MPa ou une dureté Brinell d'au moins 100 HB.

De façon optionnelle également, la première pièce de protection est montée mobile en rotation, en roue libre, autour d'un axe DD' passant par le premier boîtier et le second boîtier.

De façon optionnelle également, la première pièce de protection présente une première extrémité insérée dans une ouverture du premier boîtier sur au moins 5 mm, et une seconde extrémité insérée dans une ouverture du second boîtier sur au moins 5mm.

### DESCRIPTION DES FIGURES

Un mode de réalisation de l'invention va à présent être décrit à titre d'exemple uniquement, en référence aux figures suivantes.
La figure 1 est une vue en trois dimensions d'un antivol selon l'invention pour véhicule automobile.
La figure 2 est une vue en trois dimension d'une partie de l'antivol, avec un boîtier enlevé.
Les figures 3 et 4 sont des vues en coupe de l'antivol illustrant une surface protégée où le sciage de la pièce d'activation est prévenu.
La figure 5 est une vue similaire à celle de la figure 1, lors d'une tentative de sciage de la pièce d'activation.

### DESCRIPTION DÉTAILLÉE

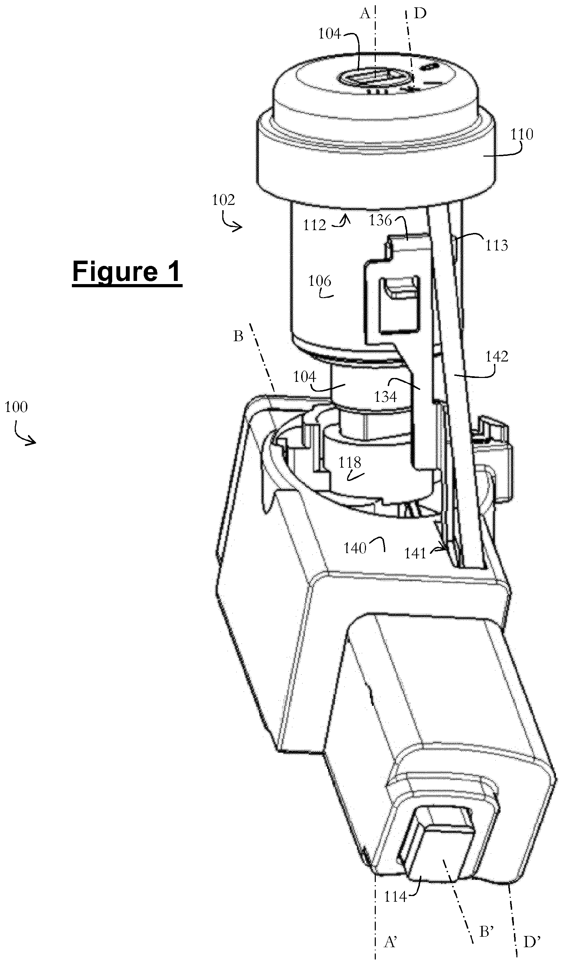

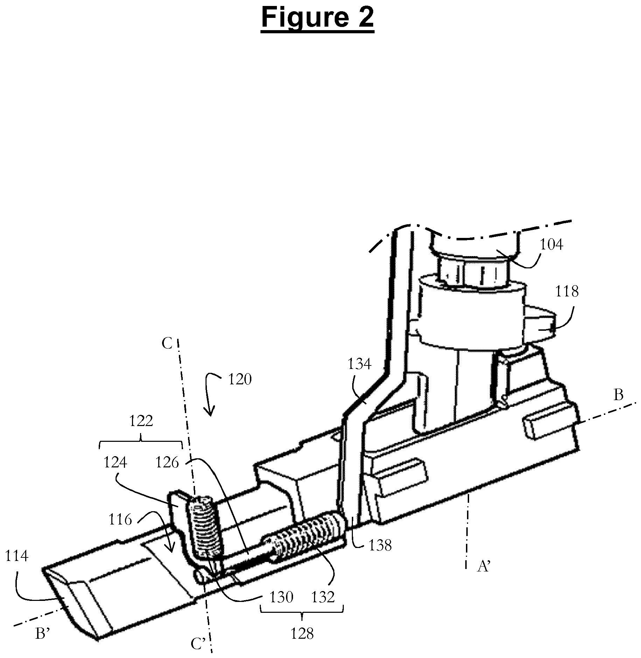

En référence aux figures 1 à 5, un antivol 100 selon l'invention pour véhicule automobile va à présent être décrit. L'antivol 100 est destiné à commander le verrouillage d'une colonne de direction du véhicule automobile et le démarrage d'un moteur de ce véhicule automobile.

L'antivol 100 comporte tout d'abord une serrure 102.

La serrure 102 comporte un barillet 104 et un premier boîtier 106 destiné à protéger le barillet 104. Le barillet 104 est destiné à tourner dans le premier boîtier 106 autour d'un axe AA' définissant une direction avant-arrière. Le barillet 104 s'étend au moins en partie dans le premier boîtier 106. Dans l'exemple décrit, le barillet 104 dépasse par l'avant du premier boîtier 106. Le barillet 104 comporte une fente arrière 108 d'introduction d'une clé (non représenté). Si la clé est compatible avec le barillet 104, l'introduction de la clé déverrouille le barillet 104 par rapport au premier boîtier 106 pour permettre la rotation du barillet 104. Le premier boîtier 106 est de forme générale cylindrique autour de l'axe AA' et présente un repli circonférentiel 110 définissant une ouverture circonférentielle 112 ouverte vers l'avant. Le premier boîtier 106 présente également une butée 113.

L'antivol 100 comporte en outre un pêne 114 de blocage de la colonne de direction. Le pêne 114 est monté mobile en translation selon un axe BB'. L'axe BB' fait un angle compris entre 90° et 135° avec l'axe AA'. Le pêne 114 est destiné à prendre une position de blocage de la colonne de direction et une position de non-blocage de la colonne de direction. Dans la position de non-blocage, le pêne 114 est destiné à laisser la colonne de direction tourner. Le pêne 114 est destiné à être déplacé entre sa position désengagée et sa position engagée par la rotation du barillet 104. Par ailleurs, le pêne 114 présente, sur un de ses côtés, une rainure 116.

Pour déplacer le pêne 114 en fonction de la rotation du barillet 104, l'antivol 100 comporte en outre une chaîne cinématique entre le pêne 114 et le barillet 104, de sorte qu'une rotation du barillet 104 déplace le pêne 114 de sa position de blocage à sa position de non-blocage. Dans l'exemple décrit, la chaîne cinématique comporte une seule pièce : une came 118 mobile en rotation autour de l'axe AA' et destinée à être entraînée par le barillet 104 pour pousser le pêne 114 de sa position engagée à sa position dégagée.

Pour replacer le pêne 114 en position de blocage, l'antivol 100 comporte par exemple un ressort (non représenté) de rappel du pêne 114 vers sa position de blocage. De manière alternative, c'est à nouveau la rotation du barillet 104 qui replace le pêne 114 en position de blocage.

L'antivol 100 comporte en outre un système de verrouillage 120 destiné à verrouiller le pêne en position de blocage.

Le système de verrouillage 120 comporte tout d'abord un système de maintien 122 du pêne 114 en position de blocage lors d'une effraction. En l'absence d'effraction, le système de maintien 122 est destiné à se trouver dans une configuration dégagée dans laquelle il permet au pêne 114 de se déplacer entre sa position de blocage et sa position de non-blocage.

Le passage du système de maintien 122 de sa configuration dégagée à sa configuration de maintien est de préférence sans retour, c'est-à-dire qu'une intervention d'un opérateur est nécessaire pour faire revenir le système de maintien 122 à sa configuration dégagée.

Dans l'exemple décrit, le système de maintien 122 comporte tout d'abord une plaque 124 mobile en translation selon un axe CC'. L'axe CC' présente un angle de préférence compris entre 45° et 135° avec l'axe BB'. Lorsque le système de maintien 122 est en configuration dégagée, la plaque 124 est destinée à être dans une position dégagée dans laquelle elle permet au pêne 114 de se déplacer. Lorsque le système de maintien 122 est en configuration de maintien, la plaque 124 est destinée à être dans une position engagée dans la rainure 116 du pêne 114 de manière à bloquer ce dernier en position de blocage.

Par ailleurs, le système de maintien 122 comporte une tige 126 en translation parallèlement à l'axe BB'. Lorsque le système de maintien 122 est en configuration dégagée, la tige 126 est destinée à être dans une position d'inhibition de la plaque 124 dans laquelle elle bloque la plaque 124 pour l'empêcher d'atteindre sa position engagée. Lorsque le système de maintien 122 est en configuration de maintien, la tige 126 est destinée à être dans une position d'activation de la plaque 124 dans laquelle la tige 126 est dégagée de la plaque 124 et permet à cette dernière de passer de sa position dégagée à sa position engagée.

Le système de verrouillage 120 comporte en outre un système de rappel 128 destiné à entraîner le système de maintien 122 de sa configuration dégagée vers sa configuration de maintien du pêne 114.

Dans l'exemple décrit, le système de rappel 128 comporte un premier ressort de rappel 130 destiné à rappeler la tige 126 vers sa position d'activation. Le système de rappel 128 comporte en outre un second ressort de rappel 132 destiné à rappeler la plaque 124 vers sa position engagée dans la rainure 116 du pêne 114.

L'antivol 100 comporte en outre une pièce d'activation 134 destinée à activer le système de verrouillage 120 en cas d'effraction.

La pièce d'activation 134 est de forme allongée et s'étend depuis le premier boîtier 106 jusqu'au système de maintien 122.

En l'absence d'effraction, la pièce d'activation 134 est destinée à être dans une position de repos dans laquelle elle empêche le système de maintien 122 de passer en configuration de maintien, malgré le système de rappel 128. En cas d'effraction sur le premier boîtier 106, la pièce d'activation 134 est destinée à prendre une autre position dans laquelle elle permet au système de maintien 122 de passer en configuration de maintien du pêne 114 sous l'impulsion du système de rappel 128.

Plus précisément, la pièce de d'activation 134 présente une première extrémité 136 en crochet engagé sur la butée 113 du premier boîtier 106, de telle sorte que, si le premier boîtier 106 est tiré, en particulier vers l'arrière, le premier boîtier 106 entraîne la pièce d'activation 134.

La pièce d'activation 134 présente une seconde extrémité 138 qui, lorsque la pièce d'activation 134 est en position de repos, forme une butée pour la tige 126, empêchant cette dernière d'atteindre sa position d'activation, et donc empêchant le système de maintien 122 de passer en configuration de maintien du pêne 114 en position de blocage, tant que le premier boîtier 106 n'entraîne pas la pièce d'activation 134 hors de sa position de repos.

Le système de verrouillage 120 comporte en outre un second boîtier 140 dans lequel s'étendent au moins en partie le pêne 114, le système de maintien 122 et le système de rappel 128 pour les protéger. Le second boîtier 140 présente une ouverture 141 de passage de la seconde extrémité 138 de la pièce d'activation 134.

Ainsi, la pièce d'activation 134 comporte ainsi un tronçon extérieur, s'étendant à l'extérieur du premier boîtier 106 et du second boîtier 140. Le tronçon extérieur de la pièce d'activation 134 est reliée par la première extrémité 136 au premier boîtier 106 et s'étend jusqu'au second boîtier 140, au niveau de l'ouverture 141.

La pièce d'activation 134 comporte également un tronçon intérieur s'étendant à l'intérieur du second boîtier 140, de l'ouverture 141 au système de maintien 122.

L'antivol 100 comporte en outre une première pièce de protection 142, telle qu'une tige s'étendant autour d'un axe DD' passant par le premier boîtier 106 et le second boîtier 140, destinée à réduire le risque de sciage du tronçon extérieur de la pièce d'activation 134. La première pièce de protection 142 s'étend du premier boîtier 106 au second boîtier 140, de sorte qu'au moins une partie du tronçon extérieur de la pièce d'activation 134 soit situé entre la première pièce de protection 142 et le premier boîtier 106.

La première pièce de protection 142 présente une première extrémité insérée dans l'ouverture circonférentielle 112 du premier boîtier 140 et une seconde extrémité insérée dans une ouverture du second boîtier 140. Dans l'exemple décrit, cette ouverture du second boîtier 140 est l'ouverture 141 de passage du de la pièce d'activation 134.

De préférence, la première pièce de protection 142 est insérée à ses deux extrémités d'au moins 5 mm, de préférence d'au moins 7 mm, dans respectivement les ouvertures 112, 141 des premier et second boîtiers 106, 140. Ainsi, il est plus difficile de retirer la pièce de protection hors des premier et second boîtiers 106, 140.

De préférence, la première pièce de protection 142 est montée mobile en rotation, en roue libre, autour d'un axe passant par le premier boîtier 106 et le second boîtier 140, tel que l'axe DD'. Ainsi, la première pièce de protection 142 tourne sur elle-même lors du sciage, rendant encore plus difficile l'action des dents d'une scie.

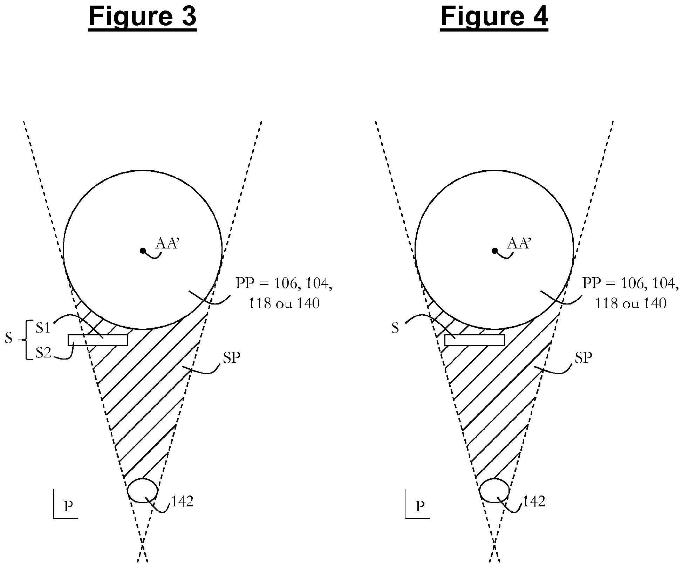

En référence, à la figure 3, pour tout plan de coupe P perpendiculaire à l'axe AA' passant par le tronçon extérieur de la première pièce de protection 142, au moins une partie SI de la section S de la pièce d'activation 134 dans ce plan de coupe P se trouve dans une surface du plan de coupe P, appelée surface protégée SP et indiquée avec des hachures sur les figures 3 et 4. Cette surface protégée SP est délimitée par la première pièce de protection 142, une autre pièce de l'antivol 100 formant une seconde pièce de protection PP et deux droites D1, D2 du plan de coupe P s'appuyant de chaque côté sur la première pièce de protection 142 et la seconde pièce de protection PP, sans passer entre la première pièce de protection 142 et la seconde pièce de protection PP.

Suivant l'endroit le long de l'axe AA' où le plan de coupe P est pris, la seconde pièce de protection PP délimitant la surface protégée SP sera : le premier boîtier 106, le barillet 104, une pièce de la chaîne cinématique (comme la came 118) ou le second boîtier 140.

Comme cela est apparent sur la figure 3, il n'est pas possible de scier complètement la pièce d'activation perpendiculairement à l'axe AA' avec une scie droite sans entrer en contact avec la première pièce de protection 142 et la seconde pièce de protection PP.

De préférence, la partie SI de la section de la pièce d'activation s'étend au moins sur 1 mm dans la surface protégée.

De préférence encore, en référence à la figure 4, pour tout plan de coupe P perpendiculaire à l'axe AA' passant par le tronçon extérieur de la première pièce de protection 142, toute la section S de la pièce d'activation 134 dans ce plan de coupe P se trouve dans la surface protégée SP. Ainsi, il n'est pas possible d'atteindre avec une scie la pièce d'activation 134 sans d'abord scier la première pièce de protection 142 et/ou la seconde pièce de protection PP.

De préférence, la première pièce de protection 142 et la seconde pièce de protection PP sont dans un matériau ayant une résistance mécanique à la traction R_{M} d'au moins 200 MPa, de préférence d'au moins 300, 400, 500, 800, 1 000 ou 1 200 Mpa, ou une dureté d'au moins 100 HB (dureté Brinell), de préférence d'au moins 200 HB, 300 HB ou 400 HB. Plus le matériau est dur, plus il est difficile de les scier. Ainsi, dans l'exemple décrit, le premier boîtier 106, le barillet 104, la came 118 et le second boîtier 140 présente chacun une résistance R_{M} d'au moins 200 MPa. Par exemple, ils sont chacun en Zamak. Dans l'exemple décrit, la première pièce de protection 142 est par exemple en acier dur.

De préférence, la première pièce de protection 142 est distante de la seconde pièce de protection PP dans chaque plan de coupe P d'au plus 10 cm. Ainsi, il est plus difficile de faire passer une scie de taille habituelle entre la première pièce de protection 142 et la seconde pièce de protection PP.

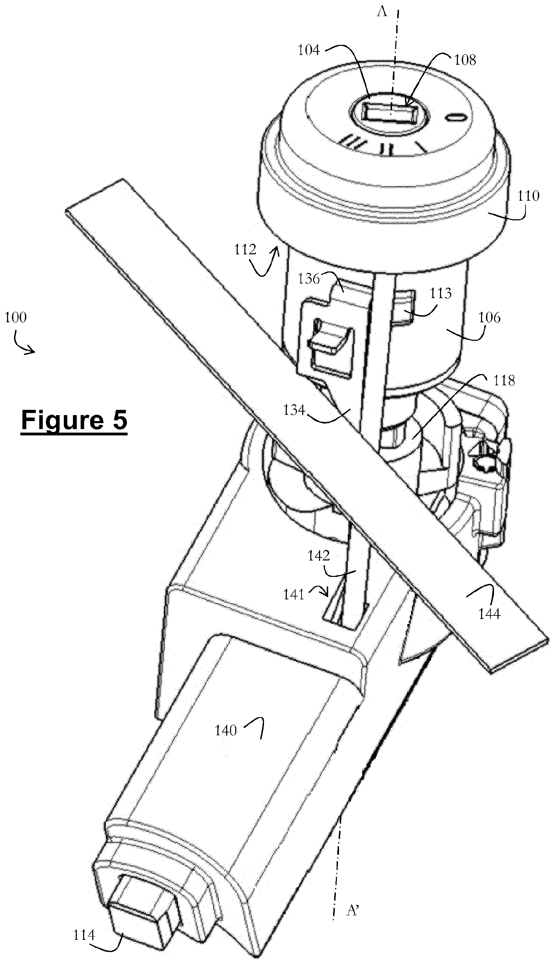

En référence à la figure 5, une personne malveillante tente de scier la pièce d'activation 134 perpendiculairement à l'axe AA' à l'aide d'une scie 148.

Comme cela est apparent, grâce à la première pièce de protection 142, la scie 148 ne pourra scier que la partie de la pièce d'activation 134 située à l'extérieur de l'espace protégé SP avant de rencontrer la première pièce de protection 142 et la seconde pièce de protection (le premier boîtier 106 sur la figure 5), voir aucune partie de la pièce d'activation 134 si elle est disposée comme sur la figure 4. Pour continuer à scier la pièce d'activation 134, l'utilisateur devra donc scier également la pièce de protection et/ou la seconde pièce de protection. Or, la grande résistance de ces pièces rend leur sciage difficile et long, ce qui permet de retarder suffisamment l'effraction (généralement de plus de deux minutes) pour dissuader la personne malveillante.

Comme cela est apparent à la lecture de la description précédente, un antivol selon l'invention réduit le risque de neutralisation, par sciage de la pièce d'activation 134, du système de verrouillage 120 de la colonne de direction.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, la forme des pièces décrites précédemment et illustrées sur les figures est uniquement indicative. D'autres formes pourraient être utilisées, tant que la fonction souhaitée est réalisée.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

**LISTE DES RÉFÉRENCES**

| | |
|---|---|
| Antivol | 100 |
| Serrure | 102 |
| Barillet | 104 |
| Premier boîtier | 106 |
| Fente arrière | 108 |
| Repli circonférentiel | 110 |
| Ouverture circonférentielle | 112 |
| Butée | 113 |
| Pêne | 114 |
| Rainure | 116 |
| Came | 118 |
| Système de verrouillage de la colonne de direction | 120 |
| Système de maintien du pêne en position de blocage | 122 |
| Plaque | 124 |
| Tige | 126 |
| Système de rappel | 128 |
| Premier ressort de rappel | 130 |
| Second ressort de rappel | 132 |
| Pièce d'activation | 134 |
| Première extrémité de la pièce d'activation | 136 |
| Seconde extrémité de la pièce d'activation | 138 |
| Second boîtier | 140 |
| Ouverture | 141 |
| Première pièce de protection | 142 |
| Scie | 144 |
| Plan de coupe | P |
| Surface protégée | SP |
| Droites délimitant la surface protégée | D1, D2 |
| Section de la pièce d'activation | S |
| Seconde pièce de protection | PP |

## Revendications

1. Antivol (100) pour véhicule automobile, comportant :
- un premier boîtier (106),
- un barillet (104) s'étendant au moins en partie dans le premier boîtier (106), le barillet (104) étant destiné à tourner dans le premier boîtier (106) autour d'un axe AA',
- un second boîtier (140),
- un pêne (114) s'étendant au moins en partie dans le second boîtier (140), le pêne (114) étant destiné à prendre une position de blocage d'une colonne de direction et une position de non-blocage de la colonne de direction,
- une chaîne cinématique entre le pêne (114) et le barillet (104) de sorte qu'une rotation du barillet (104) déplace le pêne (114) de sa position de blocage à sa position de non blocage,
- un système de verrouillage (120) destiné à verrouiller le pêne (114) en position de blocage, le système de verrouillage (120) s'étendant au moins en partie dans le second boîtier (140),
- une pièce d'activation (134) du système de verrouillage (120), la pièce d'activation (134) présentant un tronçon extérieur relié au premier boîtier (106) et s'étendant jusqu'au second boîtier (140) et un tronçon intérieur s'étendant à l'intérieur du second boîtier (140) et relié au système de verrouillage (120) de sorte qu'un déplacement du premier boîtier (106) déplace la pièce d'activation (134) dans une position dans laquelle la pièce d'activation (134) active le système de verrouillage (120),
l'antivol (100) étant **caractérisé en ce qu'**il comporte en outre une première pièce de protection (142) s'étendant du premier boîtier (106) au second boîtier (140) de sorte qu'au moins une partie du tronçon extérieur de la pièce d'activation (134) soit situé entre la première pièce de protection (142) et le premier boîtier (106).

2. Antivol (100) selon la revendication 1, dans lequel, pour tout plan de coupe (P) perpendiculaire à l'axe AA' et passant par le tronçon extérieur de la première pièce de protection (142), au moins une partie (SI) de la section (S) de la pièce d'activation (134) dans ce plan de coupe (P) se trouve dans une surface du plan de coupe (P), appelée surface protégée (SP), délimitée par la première pièce de protection (142), une seconde pièce de l'antivol (100), appelée seconde pièce de protection (PP), et deux droites (D1, D2) du plan de coupe s'appuyant de chaque côté sur la première pièce de protection (142) et la seconde pièce de protection (PP), sans passer entre la première pièce de protection (142) et la seconde pièce de protection (PP).

3. Antivol (100) selon la revendication 1, dans lequel, pour tout plan de coupe (P) perpendiculaire à l'axe AA' et passant par le tronçon extérieur de la première pièce de protection (142), toute la section (S) de la pièce d'activation (134) dans ce plan de coupe (P) se trouve dans une surface du plan de coupe (P), appelée surface protégée (SP), délimitée par la première pièce de protection (142), une autre pièce de l'antivol (100), appelée seconde pièce de protection (PP), et deux droites (D1, D2) du plan de coupe s'appuyant de chaque côté sur la première pièce de protection (142) et la seconde pièce de protection (PP), sans passer entre la première pièce de protection (142) et la seconde pièce de protection (PP).

4. Antivol (100) selon la revendication 2 ou 3, dans lequel, pour chaque plan de coupe (P), la seconde pièce de protection (PP) est l'une parmi : le premier boîtier (106), le barillet (104), une pièce (118) de la chaîne cinématique et le second boîtier (140).

5. Antivol (100) selon l'une quelconque des revendications 2 à 4, dans lequel, pour au moins un plan de coupe (P) perpendiculaire à l'axe AA' passant par le tronçon extérieur de la première pièce de protection (142), la seconde pièce de protection (PP) présente une résistance mécanique à la traction R_{M} d'au moins 200 MPa ou une dureté Brinell d'au moins 100 HB.

6. Antivol (100) selon l'une quelconque des revendications 2 à 4, dans lequel, pour tout plan de coupe (P) perpendiculaire à l'axe AA' passant par le tronçon extérieur de la première pièce de protection (142), la seconde pièce de protection (PP) présente une résistance mécanique à la traction R_{M} d'au moins 200 MPa ou une dureté Brinell d'au moins 100 HB.

7. Antivol (100) selon l'une quelconque des revendications 1 à 6, dans lequel la première pièce de protection (142) est dans un matériau présentant une résistance mécanique à la traction R_{M} d'au moins 200 MPa ou une dureté Brinell d'au moins 100 HB.

8. Antivol (100) selon l'une quelconque des revendications 1 à 7, dans lequel la première pièce de protection (142) est montée mobile en rotation, en roue libre, autour d'un axe DD' passant par le premier boîtier (106) et le second boîtier (140).

9. Antivol (100) selon l'une quelconque des revendications 1 à 8, dans lequel la première pièce de protection (142) présente une première extrémité insérée dans une ouverture (112) du premier boîtier (106) sur au moins 5 mm, et une seconde extrémité insérée dans une ouverture (141) du second boîtier (140) sur au moins 5mm.

## Patentansprüche

1. Diebstahlschutz (100) für Kraftfahrzeug, umfassend:
- ein erstes Gehäuse (106),
- einen Zylinder (104), der sich mindestens teilweise im ersten Gehäuse (106) erstreckt, wobei der Zylinder (104) ausgelegt ist, um sich im ersten Gehäuse (106) um eine Achse AA' zu drehen,
- ein zweites Gehäuse (140),
- einen Schlossriegel (114), der sich mindestens im zweiten Gehäuse (140) erstreckt, wobei der Schlossriegel (114) ausgelegt ist, um eine Blockierposition einer Lenksäule und eine Nicht-Blockierposition der Lenksäule einzunehmen,
- eine kinematische Kette zwischen dem Schlossriegel (114) und dem Zylinder (104), so dass eine Drehung des Zylinders (104) den Schlossriegel (114) von seiner Blockierposition in seine Nicht-Blockierposition verschiebt,
- ein Verriegelungssystem (120), das ausgelegt ist, den Schlossriegel (114) in der Blockierposition zu verriegeln, wobei sich das Verriegelungssystem (120) mindestens teilweise im zweiten Gehäuse (140) erstreckt,
- ein Aktivierungsstück (134) des Verriegelungssystems (120), wobei das Aktivierungsstück (134) einen äußeren Abschnitt aufweist, der mit dem ersten Gehäuse (106) verbunden ist, und sich bis zum zweiten Gehäuse (140) erstreckt, und einen inneren Abschnitt, der sich im Inneren des zweiten Gehäuses (140) erstreckt und mit dem Verriegelungssystem (120) verbunden ist, so dass eine Verschiebung des ersten Gehäuses (106) das Aktivierungsstück (134) in eine Position verschiebt, in der das Aktivierungsstück (134) das Verriegelungssystem (120) aktiviert,
wobei der Diebstahlschutz (100) **dadurch gekennzeichnet ist, dass** er außerdem ein erstes Schutzstück (142) umfasst, das sich vom ersten Gehäuse (106) zum zweiten Gehäuse (140) erstreckt, so dass sich mindestens ein Teil des äußeren Abschnitts des Aktivierungsstücks (134) zwischen dem ersten Schutzstück (142) und dem ersten Gehäuse (106) befindet.

2. Diebstahlsicherung (100) nach Anspruch 1, wobei für jede Schnittebene (P), die senkrecht zur Achse AA' ist und durch den äußeren Abschnitt des ersten Schutzstücks (142) verläuft, mindestens ein Teil (S1) der Sektion (S) des Aktivierungsstücks (134) in dieser Schnittebene (P) auf einer Oberfläche der Schnittebene (P), genannt geschützte Oberfläche (SP), angeordnet ist, die vom ersten Schutzstück (142) begrenzt ist, wobei ein zweites Stück des Diebstahlschutzes (100), genannt zweites Schutzstück (PP), und zwei Geraden (D1, D2) der Schnittebene auf jeder Seite auf dem ersten Schutzstück (142) und dem zweiten Schutzstück (PP) aufliegen, ohne zwischen dem ersten Schutzstück (142) und dem zweiten Schutzstück (PP) zu verlaufen.

3. Diebstahlsicherung (100) nach Anspruch 1, wobei für jede Schnittebene (P), die senkrecht zur Achse AA' ist und durch den äußeren Abschnitt des ersten Schutzstücks (142) verläuft, die ganze Sektion (S) des Aktivierungsstücks (134) in dieser Schnittebene (P) auf einer Oberfläche der Schnittebene (P), genannt geschützte Oberfläche (SP), angeordnet ist, die vom ersten Schutzstück (142) begrenzt ist, wobei ein weiteres Schutzstück der Diebstahlsicherung (100), genannt zweites Schutzstück (PP), und zwei Geraden (D1, D2) der Schnittebene auf jeder Seite auf dem ersten Schutzstück (142) und dem zweiten Schutzstück (PP) aufliegen, ohne zwischen dem ersten Schutzstück (142) und dem zweiten Schutzstück (PP) zu verlaufen.

4. Diebstahlsicherung (100) nach Anspruch 2 oder 3, wobei für jede Schnittebene (P) das zweite Schutzstück (PP) eines der Folgenden ist: das erste Gehäuse (106), der Zylinder (104), ein Stück (118) der kinematischen Kette und das zweite Gehäuse (140).

5. Diebstahlsicherung (100) nach einem der Ansprüche 2 bis 4, wobei für mindestens eine Schnittebene (P), die senkrecht zur Achse AA' ist, die durch den äußeren Abschnitt des ersten Schutzstücks (142) verläuft, das zweite Schutzstück (PP) einen mechanischen Widerstand gegen den Antrieb R_{M} von mindestens 200 Mpa oder eine Brinell-Härte von mindestens 100 HB aufweist.

6. Diebstahlsicherung (100) nach einem der Ansprüche 2 bis 4, wobei für jede Schnittebene (P) die senkrecht zur Achse AA' ist, die durch den äußeren Abschnitt des ersten Schutzstücks (142) verläuft, das zweite Schutzstück (PP) einen mechanischen Widerstand gegen den Antrieb R_{M} von mindestens 200 Mpa oder eine Brinell-Härte von mindestens 100 HB aufweist.

7. Diebstahlsicherung (100) nach einem der Ansprüche 1 bis 6, wobei sich das erste Schutzstück (142) in einem Material befindet, das einen mechanischen Widerstand gegen den Antrieb R_{M} von mindestens 200 Mpa oder eine Brinell-Härte von mindestens 100 HB aufweist.

8. Diebstahlsicherung (100) nach einem der Ansprüche 1 bis 7, wobei das erste Schutzstück (142) beweglich in Drehung im Freilauf um die Achse DD' montiert ist, die durch das erste Gehäuse (106) und das zweite Gehäuse (140) verläuft.

9. Diebstahlsicherung (100) nach einem der Ansprüche 1 bis 8, wobei das erste Schutzstück (142) ein erstes Ende aufweist, das in eine Öffnung (112) des ersten Gehäuses (106) auf mindestens 5 mm eingeführt ist, und ein zweites Ende, das in eine zweite Öffnung (141) des zweiten Gehäuses (140) auf mindestens 5 mm eingeführt ist.

## Claims

1. An anti-theft device (100) for a motor vehicle, including:
- a first casing (106),
- a barrel (104) extending at least partly in the first casing (106), the barrel (104) being intended to rotate in the first casing (106) about an axis AA',
- a second casing (140),
- a bolt (114) extending at least partly in the second casing (140), the bolt (114) being intended to take a blocking position of a steering column and a non-blocking position of the steering column,
- a kinematic chain between the bolt (114) and the barrel (104) so that a rotation of the barrel (104) moves the bolt (114) from its blocking position to its non-blocking position,
- a locking system (120) intended to lock the bolt (114) in the blocking position, the locking system (120) extending at least partly in the second casing (140),
- an activation part (134) of the locking system (120), the activation part (134) having an outer segment linked to the first casing (106) and extending to the second casing (140) and an inner segment extending inside the second casing (140) and linked to the locking system (120) so that a displacement of the first casing (106) moves the activation part (134) to a position in which the activation part (134) activates the locking system (120),
the antitheft device (100) being **characterized in that** it further includes a first protective part (142) extending from the first casing (106) to the second casing (140) so that at least part of the outer segment of the activation part (134) is located between the first protective part (142) and the first casing (106).

2. The anti-theft device (100) according to claim 1, wherein, for any sectional plane (P) perpendicular to the axis AA' and passing through the outer segment of the first protective part (142), at least a part (S1) of the section (S) of the activation part (134) in this sectional plane (P) lies into a surface of the sectional plane (P), called protected surface (SP), delimited by the first protective part (142), a second part of the antitheft device (100), called second protective part (PP), and two straight lines (D1, D2) of the sectional plane resting on either side on the first protective part (142) and the second protective part (PP), without passing between the first protective part (142) and the second protective part (PP).

3. The anti-theft device (100) according to claim 1, wherein, for any sectional plane (P) perpendicular to the axis AA' and passing through the outer segment of the first protective part (142), the entire section (S) of the activation part (134) in this sectional plane (P) is located in one surface of the sectional plane (P), called protected surface (SP), delimited by the first protective part (142), another part of the anti-theft device (100), called second protective part (PP), and two straight lines (D1, D2) of the sectional plane resting on either side on the first protective part (142) and the second protective part (PP), without passing between the first protective part (142) and the second protective part (PP).

4. The anti-theft device (100) according to claim 2 or 3, wherein, for each sectional plane (P), the second protective part (PP) is one among: the first casing (106), the barrel (104), a part (118) of the kinematic chain and the second casing (140).

5. The anti-theft device (100) according to any one of claims 2 to 4, wherein, for at least one sectional plane (P) perpendicular to the axis AA' passing through the outer segment of the first protective part (142), the second protective part (PP) has a mechanical tensile strength R_{M} of at least 200 MPa or a Brinell hardness of at least 100 HB.

6. The anti-theft device (100) according to any one of claims 2 to 4, wherein, for any sectional plane (P) perpendicular to the axis AA' passing through the outer segment of the first protective part (142), the second protective part (PP) has a mechanical tensile strength R_{M} of at least 200 MPa or a Brinell hardness of at least 100 HB.

7. The anti-theft device (100) according to any one of claims 1 to 6, wherein the first protective part (142) is made of a material having a mechanical tensile strength R_{M} of at least 200 MPa or a Brinell hardness of at least 100 HB.

8. The anti-theft device (100) according to any one of claims 1 to 7, wherein the first protective part (142) is movably mounted in rotation, in freewheel, about an axis DD' passing through the first casing (106) and the second casing (140).

9. The anti-theft device (100) according to any one of claims 1 to 8, wherein the first protective part (142) has a first end inserted into an opening (112) of the first casing (106) over at least 5 mm, and a second end inserted into an opening (141) of the second casing (140) over at least 5 mm.
